Europäisches Patentamt

European Patent Office

Office européen des brevets

(19)

(11) Veröffentlichungsnummer: **0 336 247 B1**

# EUROPÄISCHE PATENTSCHRIFT

(12)

(45) Veröffentlichungstag der Patentschrift: **02.03.94**

(21) Anmeldenummer: **89105347.2**

(22) Anmeldetag: **25.03.89**

(51) Int. Cl.5: **H04B 7/005**, H04K 3/00, H04L 5/12

(54) **Verfahren und Vorrichtung zur digitalen Uebertragung von Nachrichten in Kurzwellenfunknetzen.**

(30) Priorität: **07.04.88 CH 1313/88**

(43) Veröffentlichungstag der Anmeldung:
**11.10.89 Patentblatt 89/41**

(45) Bekanntmachung des Hinweises auf die
Patenterteilung:
**02.03.94 Patentblatt 94/09**

(84) Benannte Vertragsstaaten:
**AT BE DE FR GB IT NL SE**

(56) Entgegenhaltungen:
**EP-A- 0 130 263**
**EP-A- 0 176 029**
**DE-A- 3 036 239**
**DE-A- 3 122 457**

**NTIS TECH NOTES. Januar 1987, SPRING-
FIELD, VA US Seite 26; 'Pilot-Tone System
for Mobile Communications'**

(73) Patentinhaber: **Ascom Radiocom AG**
**Ziegelmattstrasse 1**
**CH-4503 Solothurn(CH)**

(72) Erfinder: **Widmer, Hanspeter**
**Rainstrasse 8**
**CH-8132 Egg b. Zürich(CH)**
Erfinder: **Küng, Roland**
**Bühlhofstrasse 66a**
**CH-8633 Wolfhausen(CH)**

(74) Vertreter: **Schwerdtel, Eberhard, Dr.**
**Ascom Tech AG**
**Berner Technopark**
**Morgenstrasse 129**
**CH-3018 Bern (CH)**

## Beschreibung

Die vorliegende Erfindung betrifft ein Verfahren zur digitalen Uebertragung von Nachrichten in Kurzwellenfunknetzen mit mehreren einen Sender und/oder einen Empfänger aufweisenden Stationen, bei welchem zur empfangsseitigen Kanalzustandsestimation dem die eigentlichen Nachrichten enthaltenden Datensignal ein Referenzsignal beigefügt und mit diesem übertragen wird.

Kanäle wie diejenigen der Kurzwelle, also solche mit a priori unbekanntem Phasenwinkel, verwenden üblicherweise nichtkohärente Empfangsdetektoren, beispielsweise Frequenzumtastung FSK oder Ein/Aus-Tastung OOK. Wenn das Fading relativ zur Signalelementdauer als langsam bezeichnet werden kann, wenn also die Kohärenzzeit wesentlich länger ist als ein Signalelement, dann kann durch die Benützung des Prozessgedächtnisses ein erheblicher Gewinn erhalten werden. Man verwendet dabei eine partiell kohärente Detektion in Verbindung mit einer Phasenestimation aus dem Empfangssignal, was beispielsweise in dem Buch "Detection, Estimation and Modulation Theory", Part I, von H.L. Van Trees, Wiley & Sons, New York 1968, beschrieben ist.

Durch die Erfindung soll nun dieses bisher nur aus der Theorie bekannte Verfahren dahingehend verbessert und erweitert werden, dass es bei speziellen Anforderungen des Kurzwellenbereichs verwendet werden kann. Diese Anforderungen sind insbesondere extrem tiefes Signalgeräuschverhältnis (SNR) und Signalinterferenzverhältnis (SIR), Fading, leicht driftende Lokaloszillatoren und Zeitbasen, hohe Geräuschbursthäufigkeit und Beeinflussung durch Empfänger-AGC (AGC = Automatic Gain Control).

Diese Aufgabe wird erfindungsgemäss dadurch gelöst, dass die Beifügung des Referenzsignals zum Datensignal mittels einer Quadraturmodulation mit dem Referenzsignal in der Q-Ebene und mit dem Datensignal in der I-Ebene erfolgt, wobei die Umhüllenden so gewählt werden, dass der Betrag der komplexen Enveloppe konstant wird.

Durch die vorgeschlagenen Verfahrensschritte wird der Betrieb nichtlinearer Senderendstufen und eine maximale Energieabgabe vom Sender ermöglicht, was den aufgezählten Anforderungen des Kurzwellenbereichs optimal Rechnung trägt. Dazu kommt als weiterer Vorteil, dass das Sendesignal eine geringe Bandbreite und eine niedrige Sensitivität gegenüber Bitschlupf aufweist.

Die Erfindung betrifft weiter eine Vorrichtung zur Durchführung des genannten Verfahrens, mit einem Empfänger für Echtzeit-Verarbeitung der empfangenen Daten.

Die erfindungsgemässe Vorrichtung ist dadurch gekennzeichnet, dass der Empfänger je eine Funktionsstufe zur Vorverarbeitung des Empfangssignals, zur Quadraturdetektion der Signalelemente, zur Selektion Daten/Referenzsignal und zur Estimation des Kanalzustands aufweist.

Im folgenden wird die Erfindung anhand eines Ausführungsbeispiels und der Zeichnungen näher erläutert; dabei zeigt:

| | |
|---|---|
| Fig. 1 | ein Diagramm zur Funktionserläuterung, |
| Fig. 2 | ein Schema der Empfangskorrelatorenstruktur, |
| Fig. 3 | eine mögliche Sprungsequenz des Sendesignals, |
| Fig. 4 | ein Prinzipschema eines adaptiven Empfängers, |
| Fig. 5 | ein Diagramm der fortlaufenden Detektion des Daten- und des Referenzsignals, |
| Fig. 6 | ein Blockschaltbild der numerischen Signalverarbeitung des Empfängers, |
| Fig. 7 | ein Prozessdiagramm des Kurzburstfilters des Empfängers, |
| Fig. 8 | ein Prozessdiagramm des Frequenzschiebers des Empfängers, |
| Fig. 9- 11 | Prozessdiagramme des Langburstfilters, |
| Fig. 12 | ein Prozessdiagramm des Frequenzfilters des Empfängers, |
| Fig. 13 | ein Prozessdiagramm der Subkanal-Spektrum-Estimation, und |
| Fig. 14 | ein Prozessdiagramm des Zeitschlupf-Estimators des Empfängers. |

Das nachfolgend beschriebene Verfahren und die zugehörige Vorrichtung zur digitalen Uebertragung von Nachrichten mit kleiner Informationsrate sind für die speziellen Anforderungen des Kurzwellenbereichs konzipiert und tragen insbesondere den folgenden Störbedingungen Rechnung:

- Extrem tiefes Signalgeräuschverhältnis (SNR) und Signalinterferenzverhältnis (SIR),
- Fading,
- leicht driftende Lokaloszillatoren und Zeitbasen,
- hohe Geräuschbursthäufigkeit, und
- Beeinflussung durch HF-Empfänger-AGC.

Die Vorrichtung, das Modem, arbeitet mit handelsüblichen HF-SSB Sende/Empfängern zusammen und erzeugt und verarbeitet Signale im Basisband des SSB-Telefoniekanals zwischen 300 und 3400 Hertz. Die Optimierung der Datenübertragung erfolgt alleine in dem vorgegebenen HF-Kanal von 3 kHz Bandbreite und beinhaltet keinerlei Einflussnahme auf die HF-Kanalfrequenz oder auf andere Parameter des HF-Systems. Eine Implementation als Subsystem in einem übergeordneten System kann vorteilhaft ebenfalls vorgenommen werden.

Die Realisation erfolgt mittels digitaler Signalverarbeitung. Eine vorgängig notwendige Frequenz- und Bitsynchronisation wird vorzugsweise mit den in der europäischen Patentanmeldung Nr. 87 105 972.1 ( = EP-A-243 885) vom 23.04.1987 und in der Schweizer Patentanmeldung Nr. 03 795/87-2 vom 29.09.1987 beschriebenen Methoden durchgeführt. Der in diesen beiden Patentanmeldungen, auf deren Offenbarung hiermit ausdrücklich Bezug genommen wird, beschriebene Analogteil und die dort ebenfalls beschriebene Prozessorarchitektur können dabei in das Modem einfach integriert werden. Da der Analogteil des Modems vorzugsweise mit dem in den genannten Patentanmeldungen beschriebenen Analogteil identisch ist, wird er hier nicht näher erläutert.

Die nach den genannten Patentanmeldungen in einem fixen Eröffnungsmodus abgewickelte Verbindungsaufnahme ist nur schwach adaptiv. Dagegen enthält die Datenübertragung im wesentlichen die folgenden Freiheitsgrade zur Adaption:
- Betriebsmodus
- Modulation
- Codierung, Coderate
- Baudrate
- Subkanalfrequenz
- Sendeleistung.

Bei der Datenübertragung werden neben den eigentlichen Nachrichten auch Kanalqualitätsdaten (LQA = Link Quality Analysis) und Befehle für die Systemadaption (EOW = Engineering Order Wire) übermittelt. Die zu übertragende Information wird blockweise mit einem Satz von M binären Sequenzen codiert, wobei eine fixe Blocklänge von N = 128 beibehalten wird und lediglich die Coderate in Form der Anzahl M der Sequenzen und die Baudrate variieren. Der Empfänger fällt seine Hypothesenentscheidung jeweils einmal pro Block und ordnet diese einem Symbol aus dem Satz von M Symbolen zu.

Es ist sowohl ARQ- ( = Automatic Repeat Request) als auch Rundfunk-Betrieb möglich, wobei für den ARQ-Betrieb ein Verfahren verwendet wird, das an das unter der Bezeichnung Memory-ARQ (MARQ) bekannte Verfahren (G. Benelli "An efficient ARQ-Technique with Memory", ALTA FREQUENZA No. 4, 1984) angelehnt ist. Die Repetition mit empfangsseitiger Akkumulation entspricht in gewisser Weise einer selbstadaptierenden Coderate. In der Vorrichtung wird die Verwendung von Kanalzustandsinformationen und Daten in unquantisierter Form (Softdecision), welche die Kapazität eines Uebertragungssystems für gedächtnisbehaftete Kanäle erhöht, ausgenützt (J. Wolfowitz "Memory increases Capacity", Inform. Control 11, 1967). Insbesondere im Kurzwellenbereich sind sowohl die signalverzerrenden als auch die additiven Störungen Musterfunktionen stark gedächtnisbehafteter Zufallsprozesse (Fading, Geräuschbursts, frequenzselektive Störungen).

Empfangsseitig wird aus dem Fadingkanal vorzugsweise die Phase und die Amplitude der empfangenen Signalelemente geschätzt, die Phase für die partiell kohärente Detektion und die Amplitude für den Decoder als Zustandsinformation. Aus dem zusätzlich mitgesendeten Referenzsignal erfolgt eine lineare Kanalzustandsestimation. Das Referenzsignal ist dem Empfänger im unverzerrten Zustand a priori bekannt, das heisst informationslos.

Für die Referenzsignal-Beifügung wurde eine Quadraturmodulation mit dem Referenzsignal in der Q-Ebene und dem eigentlichen Datensignal in der I-Ebene ausgewählt, welche für die Uebertragungseffizienz nach der von C.E. Shannon definierten Kanalkapazität optimiert sind.

Nach dieser allgemeinen Beschreibung wird nun die Erfindung anhand der Zeichnungen ausführlich erläutert:

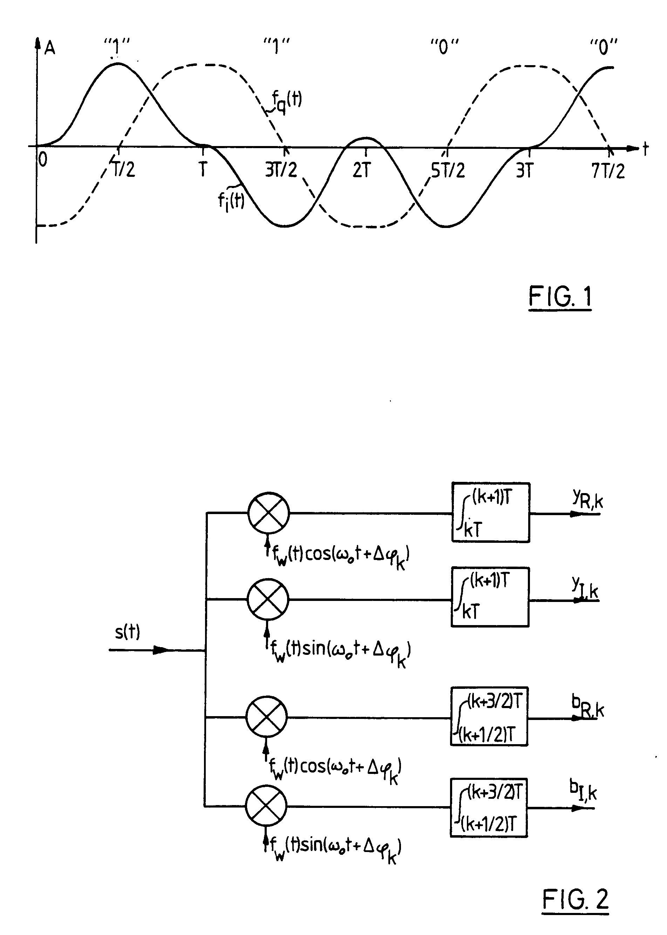

Fig. 1 zeigt ein Diagramm des zeitlichen Verlaufs der Amplitude A des Datensignals und des Referenzsignals, deren Umhüllende fi(t) beziehungsweise fq(t) so gewählt sind, dass der Betrag der komplexen Enveloppe konstant wird. Mit T ist die Beobachtungsdauer ( = Signalelementdauer) bezeichnet. Dies ermöglicht den Betrieb nichtlinearer Senderendstufen und eine maximale Energieabgabe vom Sender. Das Sendesignal ist also insgesamt eine reine Phasenmodulation und weist dank der dargestellten Konstellation eine geringe Bandbreite und eine niedrige Sensitivität gegenüber Bitschlupf auf. Gegenüber diesen Vorteilen konstante Amplitude, Schmalbandigkeit und einwandfreie Zeitschlupfestimation fällt der gegenüber der Theorie etwas höhere Anteil des komplexen Signals an Referenzenergie nicht ins Gewicht.

Die beiden Enveloppenfunktionen fq und fi basieren auf der raised-cosine Funktion:

$$f(t) = +/- (a-b.cos(2.Pi.t/T)) \text{ mit } 0 \text{ kleiner } t \text{ kleiner } T$$

Die Koeffizienten a und b sind vom jeweiligen Pulsintervall abhängig. Unter Berücksichtigung der in Fig. 2 dargestellten Empfangskorrelatoren-Struktur mit der Beobachtungsdauer T und der sogenannten Fensterfunktion fw(t) zur Seitenzipfeldämpfung frequenzmässig eng benachbarter Störsignale können a und b aus der Orthogonalitätsbedingung abgeleitet werden. In Fig. 2 bezeichnet s(t) einen trägermodulierten Puls, Phi die Phasenablage des Empfängeroszillators zum Träger von s(t); die Ausgangssignale y und b der Integratoren sind die Daten- und Referenzsignalelemente.

Es müssen dabei drei Fälle unterschieden werden, die in Fig. 1 in den Intervallen (0,T), (T/2, 3.T/2) beziehungsweise (3.T/2, 5.T/2) zu ersehen sind.

Fall 1:  a = b = 0,5      3 Intervalle mit gleichem Symbol

fq(t) = SQRT (1-fi(t).fi(t))

Fall 2:  a = b = 0,5      Referenzintervall

fq(t) = SQRT (1-fi(t).fi(t))

Fall 3:  a = 0,38  b = 0,61      Intervall mit
Symbolfolgenänderung

fq(t) = SQRT(1-fi(t).fi(t))

Diese komplexen Sendekurvenformen können dank dem Einsatz digitaler Signalverarbeitungsprozessoren einfach erzeugt werden und stehen für den Empfänger praktisch in idealer Form zur Verfügung. Das Referenzsignal ist im Mittel nur etwa halb so empfindlich gegenüber Bitschlupf, d.h. nicht exakten Synchronismus zwischen Sender und Empfänger, wie das Datensignal, was für die sichere Estimation der Phasenreferenz im Empfänger von Bedeutung ist.

Da die Geräuschleistungsdichte auf Kurzwelle innerhalb eines 3 kHz Kanals sehr stark schwanken kann und immer wieder spektrale Löcher von weniger als 100 Hz Bandbreite ausgenutzt werden können, wobei aber die Störsituation sender- und empfangsseitig meist verschieden ist, wird vorzugsweise das Sendesignal in mehrere Teilsignale mit verschiedenen Frequenzen aufgespaltet (sogenanntes Frequenz-Diversity-Verfahren). Beim vorliegenden Verfahren werden vier Teilkanäle mit fixen Frequenzen definiert.

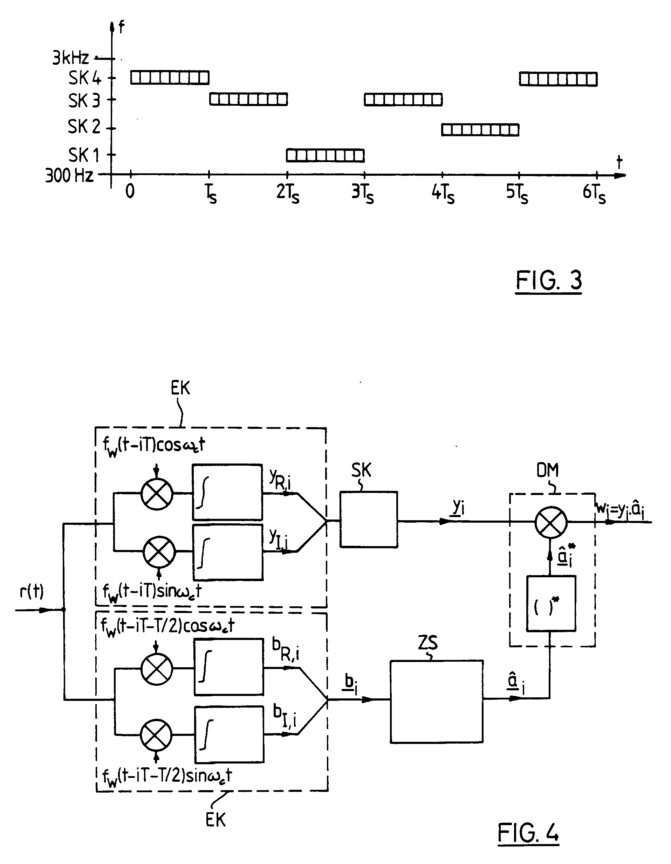

Anstelle der gleichzeitigen Aussendung derselben Nachricht auf vier verschiedenen Frequenzen wird ein Frequenzsprungverfahren angewendet, wobei für jede Datensequenz der Länge Ns und der Dauer Ns.T pseudozufällig oder treppenförmig eine Subkanalfrequenz ausgewählt wird. Die Verweilzeit Ts beträgt damit Ts = Ns.T und ist für eine Kanalzustandsestimation ausreichend lang. Die Subkanalwahl wird dann vorzugsweise während der Uebertragung auf Anweisung des Empfängers laufend optimiert, so dass störarme Subkanäle ausgenützt werden. Gegenüber dem Mehrton-Diversity-Verfahren resultiert dabei als Vorteil eine konstante Sendeleistung. Eine mögliche Sprungsequenz ist in Fig. 3 schematisch dargestellt.

Aus der bisherigen Beschreibung ist ersichtlich, dass der Senderteil nur wenig besonderen technischen Aufwand erfordert. Für den sich automatisch adaptierenden Empfänger ist hingegen eine umso komplexere Signalverarbeitung erforderlich. Mit den heute zur Verfügung stehenden digitalen Signalprozessoren ist aber eine zuverlässige Systemrealisation möglich. Dabei ist eine Echtzeit-Verarbeitung aller Daten und Parameter notwendig, welche den optimalen Einsatz der zur Verfügung stehenden digitalen Bausteine verlangt. Von Vorteil sind in diesem Zusammenhang die Speicherbarkeit aller Daten im weitesten Sinn dank deren Digitalisierung, sowie die Alterungsfreiheit und die abgleichfreie Herstellung und Wartung infolge der vollständig digitalen signalverarbeiteten Architektur.

Eine grobe Funktionsunterteilung des gesamten Empfängers ergibt folgende Funktionsstufen:
- Empfangssignalvorverarbeitung
- Quadraturdetektion
- Estimation des Kanalzustands
- Demodulation des Kanalzustands
- Demodulation der Daten
- Estimation der Synchronisationsparameter
- statistische Erfassung des Fadingprozesses und statistische Auswertung der Subkanäle
- Adaption des Estimationsprozesses und Synchronisationskorrekturen (Tracking)
- Akkumulation demodulierter Daten
- Decodierung
- Subkanal-Frequenzspringen

Grundsätzlich gilt für den Empfänger, dass die komplexen Werte der Quadraturdetektion des i-ten Daten- und Referenzsignalelements $\underline{y}i$ bzw. $\underline{b}i$ Komponenten des Empfangsvektors sind, die aus dem Empfangssignal elementweise detektiert und quantisiert abgespeichert werden. In Fig. 4 ist, unter Weglassung sämtlicher Hilfseinrichtungen, das Grundprinzip des Empfängers zwar anschaulich, aber in einer physikalisch nicht realisierbaren Form, dargestellt. Man erkennt in Fig. 4 die Empfangskorrelatoren EK, an diese anschliessend einen Skalierer für die Datensignalelemente $\underline{y}i$ und einen Zustandsschätzer ZS für die Referenzsignalelemente $\underline{b}i$ und schliesslich einen Datendemodulator DM. Die praktische Realisierung hat gezeigt, dass der Zustandsschätzer ZS "akausal" ist, also grundsätzlich nicht realisiert werden kann.

Die Codierung und Decodierung der gesendeten Daten ist ein von der gesamten Demodulationsoperation abtrennbares Problem, welches entsprechend dem gewünschten Fehlererkennungsvermögen, Korrekturvermögen und Bündelstörverhalten und je nach Betriebsart ARQ oder Rundspruch gewählt wird. Vorzugsweise können Hadamard Codes eingesetzt werden, die die Eigenschaft der paarweisen Orthogonalität zwischen den Codevektoren eines Satzes aufweisen. Die Decodierung mittels der mit der diskreten Fouriertransformation verwandten Hadamard Transformation ist somit ein einfach zu implementierenden Algorithmus, der die Architektur des Signalprozessors ausnützen kann.

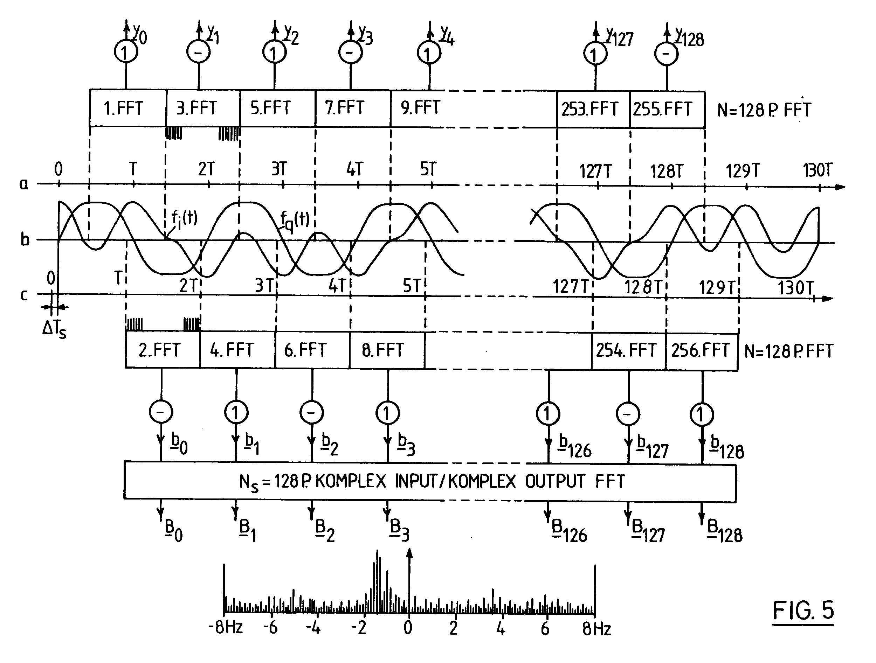

In Fig. 5 ist die fortlaufende Detektion des Daten- und Referenzsignals dargestellt. In Zeile a ist die Senderzeit aufgetragen, in Zeile b das Datensignal fi(t) und das Referenzsignal fq(t), in Zeile c die Empfängerzeit, welche gegenüber der Senderzeit einen Zeitschlupf Delta Ts aufweist, und in Zeile d schliesslich das aus den Referenzsignalelementen bi berechnete Signalspektrum.

Mittels Korrelation werden die Elemente der Dauer T des Daten- und Referenzsignals in Quadratur detektiert (Fig. 2). Realisiert ist diese zeitdiskrete Korrelation in Form einer ganzen Bank von Detektoren, welche unter Zuhilfenahme der Schnellen Fourier Transformation (FFT) gleichzeitig auf verschiedenen Kanälen arbeiten. Diese FFT liefert neben den eigentlichen Signalstützwerten auch die Daten für eine zusätzliche Geräuschanalyse. Die Grösse N der FFT ist von T, das heisst von der Baudrate abhängig und ist in Tabelle 1 zusammengestellt. Dabei bezeichnet RB die Baudrate, T ist in Millisekunden angegeben.

| RB | T | N |
|----|------|-----|
| 16 | 62,5 | 128 |
| 32 | 31,3 | 64 |
| 64 | 15,6 | 32 |
| 128 | 7,8 | 16 |

Tabelle 1

Die Transformation erfolgt abwechslungsweise mit hintereinanderfolgender FFT von sich um T/2 überlappenden Zeitabschnitten analog zur EP-A-243 885. In Fig. 5 ist der Vorgang für N = 128 dargestellt und es ist die Aufteilung der FFT Spektren in Daten- und Referenzsignalelemente yi bzw. bi ersichtlich, von denen je Ns = 128 eine Blocklänge ausmachen.

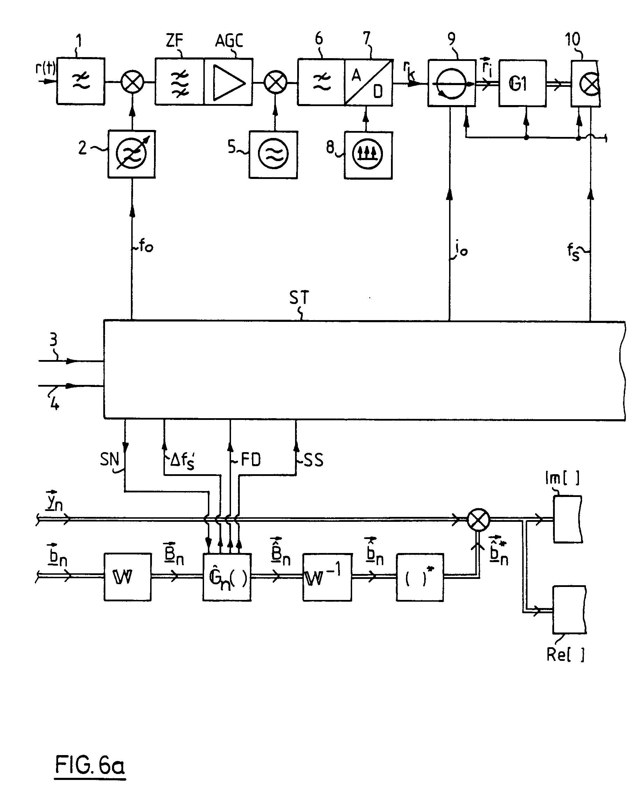

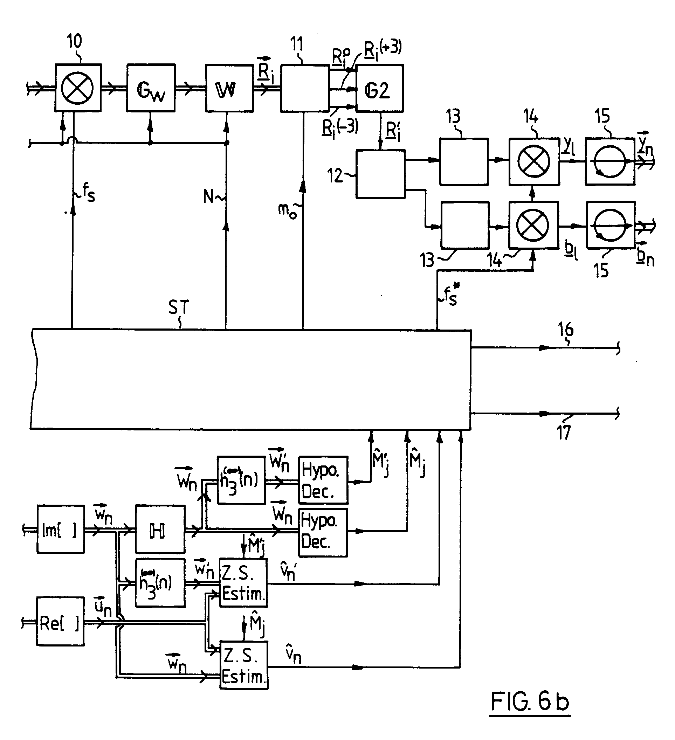

Fig. 6 zeigt ein Blockschaltbild der numerischer Signalverarbeitung des Empfängers, welches aus Platzgründen auf zwei Figuren 6a und 6b aufgeteilt ist. Die beiden Figuren sind aneinandergereiht zu denken, wobei Fig. 6b rechts von Fig. 6a zu liegen kommt. Ausserdem ist zu beachten, dass der in den Figuren untere Teil dem oberen nachgestellt ist, d.h. das Eingangssignal r(t) vom HF-Empfänger trifft in Fig. 6a links oben ein und durchläuft die obere Kette von Bausteinen bis zu den Ausgangsvektoren yn und bn in Fig. 6b rechts oben. Die genannten Ausgangsvektoren sind dann die Eingangssignale in Fig. 6a links unten.

Darstellungsgemäss weist der adaptive Empfänger eine zentrale Steuerung ST für die einzelnen Stufen auf. Das Eingangssignal r(t) aus dem HF-SSB-Empfänger im Frequenzband zwischen 300 Hz und 3 kHz wird mit einem Tiefpassfilter 1 vorgefiltert. Das gefilterte Signal wird von einem variablen Oszillator 2 in ein Empfangsband hinaufgemischt und anschliessend mit einem ZF-Filter (500 Hz breites Bandpassfilter) gefiltert. Von einem zweiten Mischer 5 wird das Signal unabhängig von der Filtermittenfrequenz in ein Verarbeitungsband zwischen 250 Hz und 750 Hz heruntergemischt und mit einer Abtastfrequenz von 2048 HZ in 16 bit Digitalwerte umgesetzt. Der A/D-Wandler ist mit 7 bezeichnet, der Generator für den Abtasttakt mit 8. Mit dem Bezugszeichen 6 ist ein Spiegelfrequenzfilter bezeichnet und mit AGC eine AGC-Schaltung, welche für eine korrekte Ausnützung der Dynamik des A/D-Wandlers 7 sorgt (siehe auch EP-A-243 885). Der variable Oszillator 2 ist von der Steuerung ST mit der Subkanalfrequenz fo angesteuert.

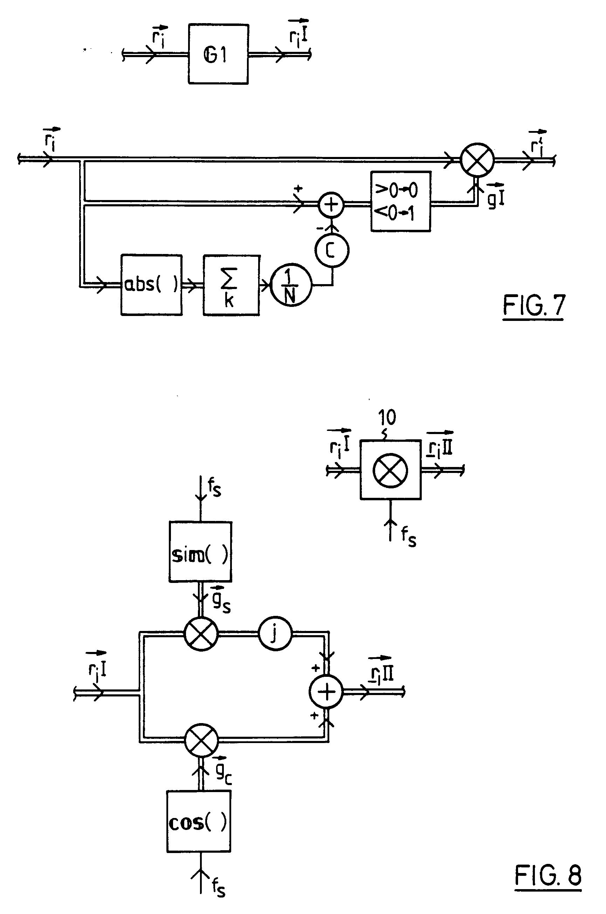

An den A/D-Wandler 7 ist ein Eingangspufferspeicher 9 angeschlossen, der von der Steuerung ST den Starttakt io für die Bitsynchronisierung erhält. Bevor nun die Vektoren ri fouriertransformiert werden, erfolgen drei Operationen im Zeitbereich. Die erste davon ist eine Burstfilterung in einem ersten Burstfilter G1 für Bursts der Dauer TB viel kürzer als T. Diese Filterung geht von der Annahme aus, dass Geräusch und Nutzsignal über die Zeitdauer T nicht wesentlich variieren. Kurze Geräuschbursts können daher als statistische Ausreisser identifiziert werden, die das arithmetische Mittel des i-ten Detektionsintervalls T übermässig überschreiten. Eine zweiwertige Filterfunktion mit den Gewichten gi(k) = 0 oder 1 merzt die Burstwerte aus. Das zugehörige Prozessdiagramm ist in Fig. 7 dargestellt.

Bei der Verbindungsaufnahme zweier Modems wird gemäss EP-A-243 885 die Trägerfrequenzablage auf plus/minus 1 Hz estimiert und als Synchronisationsparameter an den beschriebenen Modemempfänger weitergegeben. Anhand dieses Wertes und der erforderlichen Baudrate errechnet der Empfänger die dem geschätzten Signal am nächsten stehende Frequenz mo des diskreten Spektrum. Die Frequenzkomponente an dieser Stelle wird als Detektionswert des Daten- und Referenzsignals definiert. Ein Frequenzschieber 10 sorgt dafür, dass das Eingangssignal um die Differenz fs zwischen dem FFT-Raster und der estimierten Frequenz aus der Verbindungsaufnahme geschoben wird. Die Genauigkeit beträgt anschliessend plus/minus 1 Hz; Fig. 8 zeigt das dafür notwendige Prozessdiagramm.

Anschliessend erfolgt eine Gewichtung mit der Fensterfunktion fw(t), welche der Erhöhung der Seitenzipfeldämpfung der Korrelatoren benachbarter Frequenzstützwerte und als Matched-Filter für die Enveloppenform des Datensignals dient. Vorzugsweise wird diese Funktion in einem ROM mit Nmax = 128 reellen Abtastwerten abgespeichert. Als optimale Lösung wurde ein 4-Term Harris Fenster Gw gefunden. Anschliessend erfolgt die Schnelle Fouriertransformation (FFT) W. Diese ist eine N- Punkt Transformation (siehe Tabelle 1); entsprechend ist die FFT von der Steuerung ST mit der Vektordimension N angesteuert. Das Ergebnis der FFT ist ein Signalvektor $\underline{R}i$.

Für die Weiterverarbeitung nach der FFT werden in einer Stufe 11 drei Stützwerte selektioniert, nämlich der Frequenzstützwert bei mo, bei mo + 3 und bei mo-3. Die beiden letzteren sind dekorrelierte Detektionswerte aus der Frequenzumgebung des Nutzsignals und sie werden zur Bestimmung des Grundgeräuschpegels im nachfolgenden Langburstfilter G2 benötigt. Es ist zu beachten, dass infolge der Verschiebung um T/2 für ungerade Werte von m jeder zweite Detektionswert eine Vorzeichenkorrektur benötigt.

Bei langen Burst handelt es sich hauptsächlich um Geräuschbündel mit einer Länge zwischen 0,5.T und 5.T Diese sind innerhalb der Abtastwertefolge der Anzahl N nicht mehr eindeutig identifizierbar. Sie machen sich aber in einer plötzlichen starken Erhöhung der Betragswerte aufeinanderfolgender Detektionswerte bemerkbar. Schwankungen durch Fading und AGC finden in ähnlichen Zeiträumen statt und erschweren die einfache Identifikation langer Bursts. Die Vorrichtung verwendet daher eine laufende Mittelwertbildung in einem digitalen Tiefpassfilter 1. Ordnung mit einer Zeitkonstante 5.T und vergleicht deren Wert mit den aktuellen Betragswerten von yi oder bi:

$$R'(i) = al.R(i-1) + bo.R(i)$$

Eine erhöhte Zuverlässigkeit der Bursterkennung ergibt sich mit zwei zusätzlichen gleichartigen Detektionen des Geräuschs auf benachbarten Frequenzen. Diese werden wie erwähnt bei mo + 3 und mo-3, also im Frequenzabstand Delta f = 3/T gewonnen. Eine Vergleichslogik analysiert die vorhandene Situation.

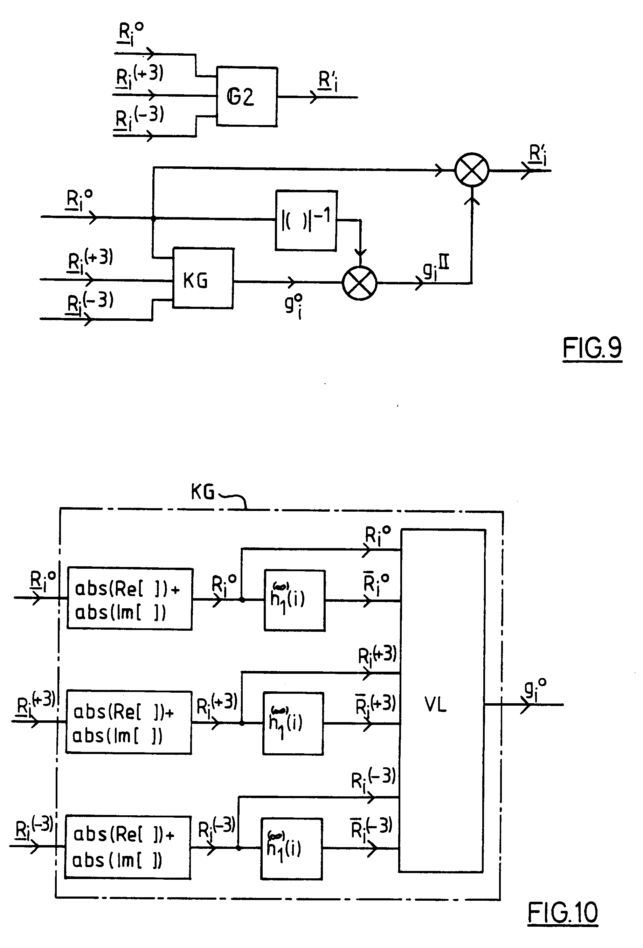

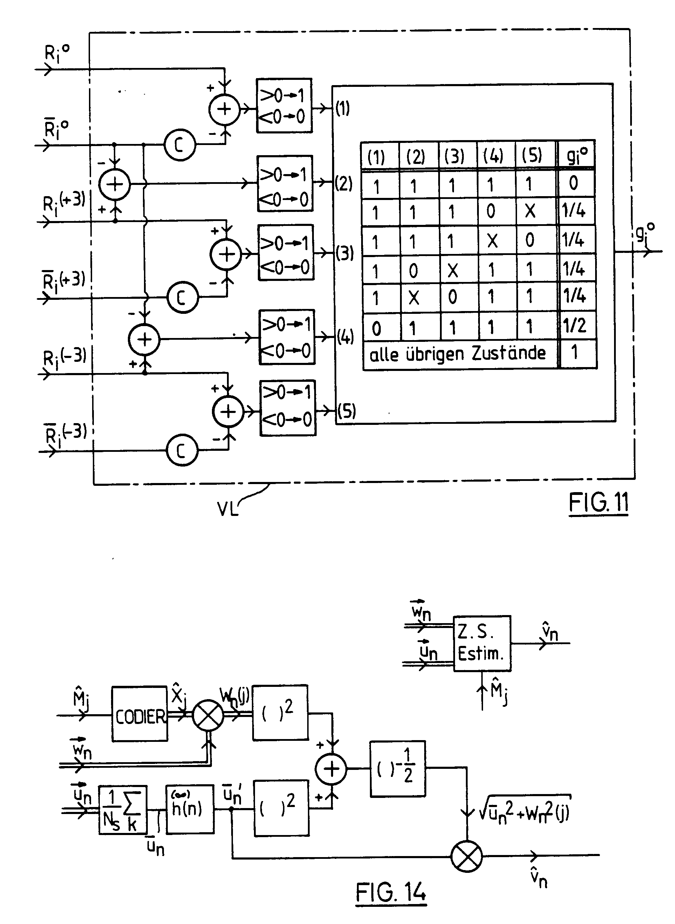

Fig. 9 zeigt das Prozessdiagramm des Langburstfilters G2 und der Einheitsskalierung, Fig. 10 zeigt die Subroutine für die Koeffizientengenerierung KG von Fig. 9 und Fig. 11 die Subroutine der Vergleichslogik VL von Fig. 10.

Gemäss Fig. 11 enthält die Vergleichslogik VL fünf Burstdetektoren, die ihre Eingangssignale aus den drei Mittelwerten und aus den drei aktuellen Werten beziehen. Die Logik ermittelt die Klasse des Burstergebnisses und teilt dieser einen von vier Gewichtungsfaktoren gi (0, 1/4, 1/2, 1) zu. Für die Zuteilung dieser Gewichtungsfaktoren gilt:

| | |
|---|---|
| gi = 0: | Bei Koinzidenz der Burstdetektion auf allen fünf Detektoren. |
| gi = 1/2: | Bei Bursts nur auf den Nachbarfrequenzen von mo mit grösserem Aktualwert als der Mittelwert von mo. |
| gi = 1/4: | Bei Bursts nur auf der Frequenz mo und einer der Nachbarfrequenzen und kleinerem Mittelwert bei mo als aktueller Wert der Nachbarfrequenz. |
| gi = 1: | Bei allen übrigen Zuständen. |

Mit dem Bezugszeichen 12 ist die Daten/Referenzsignal-Selektion bezeichnet. Aus Fig. 5 ist ersichtlich, dass der erste Detektionswert (i = o) und damit auch alle anderen Detektionswerte mit geradem i auf die Datensignalelemente einer empfangenen Sequenz treffen. Folglich enthalten Detektionswerte mit ungeradem i das Referenzsignal und können einfach abgespalten werden. Somit liegen an einem Ausgang der Daten/Referenzsignal-Selektion 12 die Detektionswerte $\underline{y}1$ mit dem Referenzsignal und am anderen die Detektionswerte $\underline{b}1$ mit dem Datensignal.

Anschliessend erfolgt in zwei Stufen 13 für beide Arten von Detektionswerten eine Vorzeichenalternierung. Eine solche ist gemäss Fig. 5 bei jedem zweiten Daten- und Referenzsignaldetektionswert erforderlich, um diese Werte für eine korrekte Demodulation bereitzustellen. Dann folgen zwei zweite Frequenzschieber 14, denen je ein zweiter Pufferspeicher 15 nachgeschaltet ist, der Ns Detektionswerte speichert. Die zweiten Frequenzschieber 14 dienen zur Kompensation einer allfälligen Frequenzdrift.

Diese Kompensation erfolgt, sobald ein brauchbarer Schätzwert der Drift zur Verfügung steht; der genannte Schätzwert fs* wird von der Steuerung ST geliefert. Die zweite Frequenzschieberstufe 15 weist eine Genauigkeit von

$$Delta\ fs = 1/Nf.T$$

auf, was bei der minimalen Baudrate (RB = 16) nur 0,0078 Hz als Frequenzinkrement ergibt. Nf ist die Grösse der ROM Tabelle für Cosinus/Sinus-Werte und beträgt in der praktischen Ausführung 2048. Die Kompensation einer konstant angenommenen Frequenzdrift erfolgt mit einer linear zunehmenden Frequenzschiebung in entgegengesetzter Richtung. Sobald die momentane Kompensationsfrequenz den Wert 1 Hz überschreitet, wird die schon erwähnte Feinsynchronisation um 1 Hz nachgeführt und die momentane Feinstsynchronisation auf Null zurückgesetzt. Damit wird sichergestellt, dass die Trägerfrequenz immer nahe an den Frequenzpunkt der FFT bei mo zu liegen kommt und die Detektion optimal bleibt.

Es existieren also insgesamt vier Frequenzsteuereinrichtungen:

- Subkanalfrequenzwahl (analog) mit dem Oszillator 2
- Grobfrequenzabgleich mit der FFT (Stufe W) und der Wahl von mo
- Feinfrequenzabgleich mit dem ersten Frequenzschieber 10
- Feinstabgleich (Driftkompensation) mit dem zweiten Frequenzschieber 14.

Der Kanalzustand wird durch autoadaptive Filterung des Referenzsignals im Frequenzbereich estimiert. Es wurde gefunden, dass mittels einer übergeordneten Schnellen Fouriertransformation W aus den im Pufferspeicher 15 bereitgestellten Vektoren $b_n$ (siehe auch Fig. 5) ein Systemvektor $B_n$ erzeugt werden kann, für den in Anspruch genommen werden kann, dass die stark statistisch abhängigen, aufeinanderfolgenden Referenzsignalelemente nun statistisch entkoppelt sind. Der Vektor $b_n$ selbst setzt sich aus dem tatsächlichen Zustandsvektor $a$ und aus einem Geräuschanteil $n$ additiv zusammen. Eine Schätzung von $a$ erhält man durch die Gewichtung von $B_n$ mit einer Gewichtungsmatrix Gn und anschliessender inverser Fouriertransformation W hoch -1:

Vektor $a_n$ = W hoch -1 . Gn . W . Vektor $b_n$

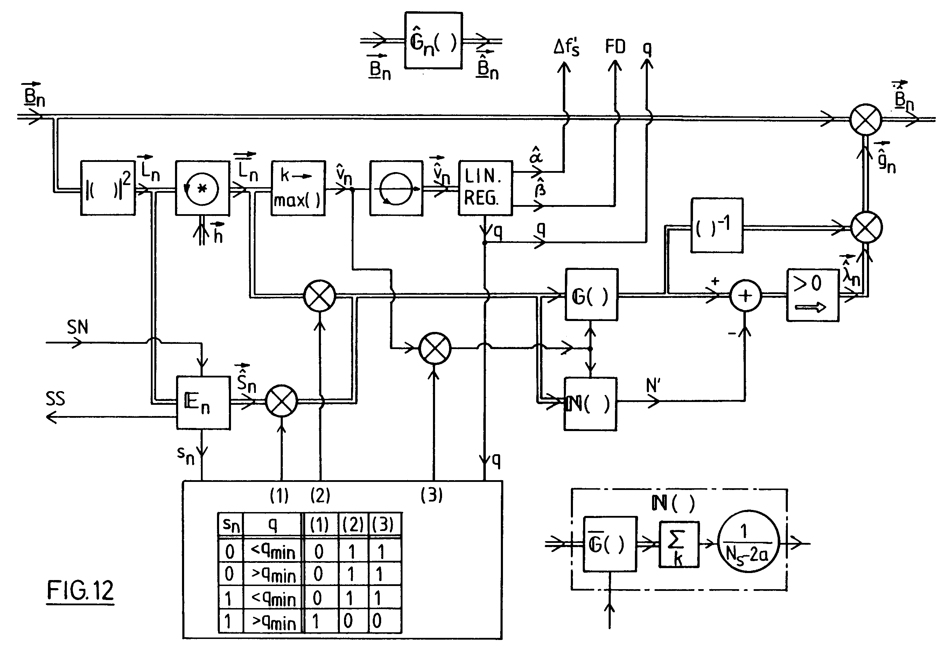

Die Gewichtungsfunktion erhält damit die Bedeutung einer Filterung im Frequenzbereich. Das Frequenzbereichfilter mit Estimation von Frequenzdrift und -ablage ist in Fig. 12 gezeigt.

Die Matrix hat Diagonalform mit den Elementen

Lamda (i)/(Lamda (i) + N')

mit 1 kleiner/gleich i kleiner/gleich Ns.

Die Eigenwerte des Fadingprozesses Lamda (i) sind gerade die Stützwerte des diskreten Leistungsdichtespektrums des Fadingprozesses $a$ und werden durch Subtraktion des Geräusches N' vom gesamten Leistungsdichtespektrum erhalten. N' ist die uniforme Geräuschleistungsdichte. Diese Koeffizienten von Gn werden wahlweise aufgrund des geglätteten Spektrogramms Ln oder auf Basis eines zeitlich gemittelten Spektrogramms Sn ermittelt. Solange keine Schätzwerte der Frequenzdrift vorliegen, werden die Koeffizienten von Gn aus dem geglätteten Vektor Ln geschätzt.

In Fig. 6a sind zwischen der Gewichtungsmatrix Gn und der Steuerung ST vier Verbindungsleitungen eingezeichnet, welche für folgende Steuerparameter vorgesehen sind: Die Leitung SN für die Subkanalnummer (1 bis 4), die Leitung Delta fs' für das Frequenzoffset, die Leitung FD für die Frequenzdrift und die Leitung SS für die Subkanalstatistik.

Die Ermittlung von N' geschieht mit der in Fig. 12 gezeichneten Subroutine N(vn). Dabei ist vn die Position des Maximums des geglätteten Vektors Ln; G(vn) und Gquer(vn) sind zwei Komponentenfenster, die dafür sorgen, dass nur solche Komponenten von Ln durchgelassen werden, die dem Nutzsignal oder dem Nur-Geräusch zugeordnet werden können. Die Glättungsoperation der Spektrogramme erfolgt mit einer zirkularen Faltung von Ln mit einem Cosinus-Fenster und dient der Senkung der Schätzfehlervarianz für die Bestimmung von vn, der Maximalposition des geglätteten Spektrums Ln (siehe dazu auch: A.V. Oppenheim, R.W. Schäfer "Digital Signal Processing", Prentice Hall, N.Y.).

Für die Ermittlung der Parameter für eine lineare Regression zur Estimation des Frequenzoffsets Delta fs' und der Frequenzdrift FD werden Ny = 8 ermittelte Maxima vn in einen Pufferspeicher geladen und als Vektor v bereitgestellt. Wird eine genügende Qualität der Regression erreicht, so wird die Frequenzkompensation des Empfängers eingeschaltet.

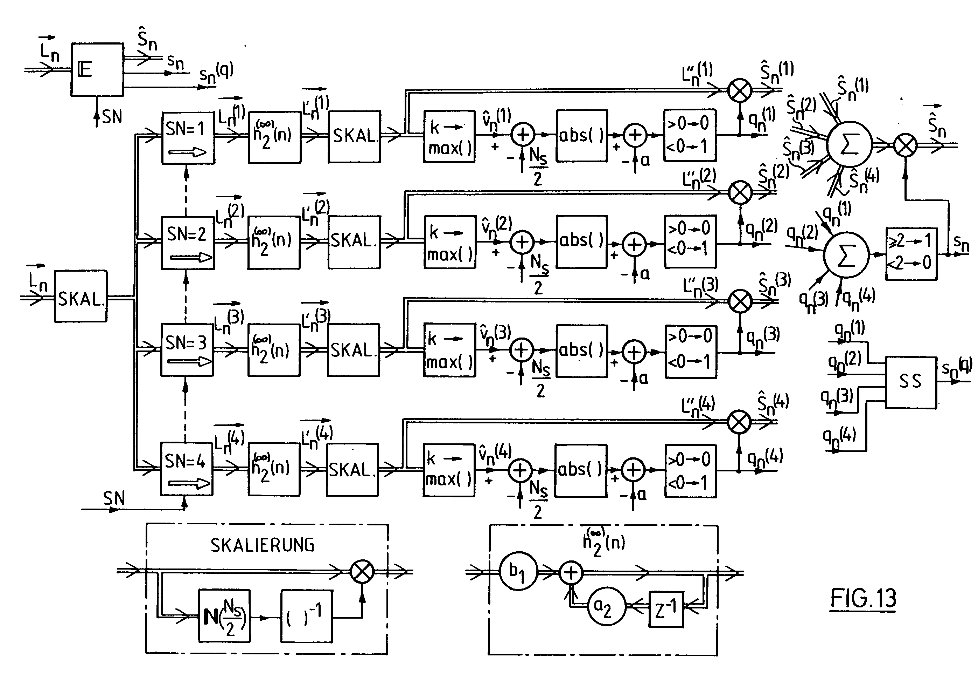

Nun können die Filterkoeffizienten anstatt aus dem geglätteten Vektor Ln auf der Basis der gemittelten Periodogramme Sn berechnet werden (Bartlett Methode, A.V. Oppenheim, R.W. Schäfer "Digital Signal Processing", Prentice Hall, N.Y.). Dazu wird in einem Tiefpassfilter 1. Ordnung subkanalweise eine laufende Mittelwertbildung durchgeführt, um der unterschiedlichen Störsituation auf den einzelnen Subkanälen Rechnung zu tragen. Vor und nach dem Mittelungsprozess wird eine Skalierung durchgeführt, so dass das Geräuschniveau auf einen einheitlichen Wert gebracht wird (siehe Fig. 13, die ein Detail von Fig. 12 zeigt).

Bevor die gemittelten Periodogramme L'n summiert werden, werden sie einzeln auf ihre Qualität geprüft, d.h. man prüft, ob sich das Maximum von L'n(k) genügend im Bereich der Periodogramm-Mitte befindet:

Ns/2-a kleiner/gleich k kleiner/gleich Ns/2 + a

Dabei entspricht a der halben Komponentenfensterbreite für das Nutzsignal. Bei Erfüllung dieser Bedingung wird das Tor zum Summieren geöffnet.

Die Verwendung des Vektors Sn zur Koeffizientengenerierung erfordert, dass mindestens zwei Subkanäle die Qualität erreichen. Dies wird durch die Variable sn angezeigt. Ist sn = 0 erreicht, dann wird wieder auf die geglätteten Periodogramme umgeschaltet. Dann wird wieder die lineare Regression mit der Periode Ny durchgeführt und somit Drift und Ablage des empfangenen Referenzsignals stets unter Kontrolle gehalten. Die langfristige Qualität der einzelnen Subkanäle wird aus einer Statistik der ermittelten Qualitäten qn und der Erasure-Statistik der Datendecodierung ermittelt und kann somit, wie die Leitung SS in Fig. 6a zeigt, für einen adaptiven Betrieb eingesetzt werden.

Nach der Fourierrücktransformation W hoch-1 werden die Empfangsvektoren $\underline{y}n$ mit dem konjugiert komplexen Ausgangswert des autoadaptiven Filters multipliziert. Dies bewirkt eine Drehung des Empfangsvektors $\underline{y}n$ um den aus der Kanalzustandsestimation erhaltenen Winkel phiref (partiell kohärente Demodulation). Real- und Imaginärteil werden zur Decodierung und zur Zeitschlupfestimation herangezogen. Der Realteil un stellt eine sensitive Grösse für den Zeitschlupf Ts dar. Da bei verrauschten Empfangssignalen die Werte von un fehlerbehaftet sind, muss über eine grosse Anzahl von Werten gemittelt werden. Da sich auch bei der höchsten in der beschriebenen Vorrichtung angewandten Baudrate (RB = 128) Driften von quarzstabilen Zeitbasen erst nach einigen Minuten Sendezeit auswirken, werden alle Komponenten des Vektors un einer ganzen Sequenz der Länge Ns arithmetisch gemittelt, wie Fig. 14 zeigt. Diese Mittelwerte werden nochmals in einem digitalen Tiefpassfilter 1. Ordnung laufend gemittelt. Des weiteren soll eine Kompensation des Schlupfwinkels erst dann stattfinden, wenn eine Datensequenz das Decodierungskriterium erfüllt hat.

Da der gesendete Datenvektor dann bekannt ist, kann, je nachdem, ob das Codewort aus dem Akkumulator oder direkt detektiert wurde, der Zeitschlupf gemäss Fig. 14 errechnet werden, indem die gemittelten un-Werte mit dem Detektionswert des hypothetischen, empfangenen Codeworts skaliert werden. Die in Fig. 14 eingezeichnete Funktionsstufe h(n) ist nur bei dem in Fig. 6b oberen Zeitschlupfestimator Z.S.Estim. (Ausgangssignal $\widehat{v}n$')vorhanden. Die Skalierung ist aus Gründen der Empfangspegelabhängigkeit notwendig. Die Fehlergrössen $\widehat{v}n$ bzw. $\widehat{v}n$' bewegen sich im Bereich -1 bis +1 und werden in einer Regelschlaufe zur Schlupfkompensation verwendet.

Für die Decodierung der demodulierten und mit Zustandsinformation gewichteten Vektoren wn werden diese nun Hadamard transformiert. Mit einem Schwellenwertvergleich für jede Komponente des Ausgangvektors Wn wird dann die Position eines allfälligen empfangenen Codeworts ausfindig gemacht (siehe die Eigenschaften der Hadamard Codes). Wenn mehrere die Schwellenwertbedingung erfüllen, dann wird nach dem Maximum-Likelihood-Prinzip der grösste ausgewählt. Dieser Entscheid basiert auf dem Neyman-Pearson-Kriterium, bei welchem Detektions- und Fehlerwahrscheinlichkeit gegeneinander abgewogen werden können.

Wenn die Nachricht nicht auf Anhieb empfangen wird, so werden wiederholte Sequenzen in der demodulierten Form Vektor Wn in einem Akkumulator laufend gemittelt:

Vektor W(n) = 1/n((n-1).Vektor W(n-1) + Vektor W(n))

Dabei ist n die Repetitionszahl und der Schwellentest ist analog zum schon Gesagten implementiert. Zwei mit 16 und 17 bezeichnete Ausgänge der Steuerung ST dienen für die Weiterleitung der decodierten Daten zum Terminal bzw. der Daten (Request, Subkanalwahl, Baudrate) für die Rückmeldung.

Die Universalität der verwendeten digitalen Signalprozessoren ermöglicht völlig neue Systemkonzepte, die noch vor kurzer Zeit nur theoretische Bedeutung hatten. Mathematische Funktionen wie Fouriertransformation, Faltung und Korrelation können heute in technische Systeme implementiert werden.

Gleichzeitig wird eine Erhöhung der Zuverlässigkeit, Stabilität, Alterungsfreiheit und vereinfachte Produktion erreicht. Das vorliegende Verfahren und die dazugehörige Vorrichtung eines LRT (Low-Rate-Transmission) Datenmodem nutzt dieses Potential und diese Vorteile voll für die Verbesserung der Informationsübertragung auf Kanälen mit hohem Störsignalanteil und zeitlich stark schwankenden Kanalparametern aus, wie sie vor allem bei der Uebertragung im Kurzwellenbereich auftreten.

Es werden Kommunikationsmöglichkeiten bis zu einem Signal zu Geräuschverhältnis von SNR = -30 dB bei 3 kHz AWGN (additional white gaussian noise) eröffnet unter den Nebenbedingungen von maximal 0.5 Hz Dopplerspread und 50 mHz/s Frequenzdrift.

Der Datendurchsatz ist für geringe Datenmengen besonders geeignet und variiert adaptiv je nach Zustand des Kanals und der Störsituation zwischen 0.1 und 50 bit/s. Gegenüber herkömmlichen Mitteln findet aber mit einem solchen Modem eine Verbindungsunterbruch praktisch nicht statt und innerhalb der adaptiven Datenrate wird stets der maximal mögliche Durchsatz erzielt. Die Zeichenfehlerrate beträgt für obige Parameter weniger als CER = 10 hoch- 3. Unstabile Lokaloszillatoren und Zeitbasen werden automatisch kompensiert und nachgeregelt und es findet innerhalb eines Kanals von 3 kHz Bandbreite eine Adaption der Frequenzposition des Nutzsignals statt (Modemeigene Intelligenz zur Subkanalwahl). Zudem wird für den ARQ-Betrieb eine Akkumulation der fehlerhaften Datensequenzen durchgeführt um die Effizienz der Uebertragung zu erhöhen (Memory Automatic Repeat Request = MARQ). Ein der Leistungsfähigkeit dieses Modems angepasster, robuster Verbindungsaufbau mit Selektivruf und vollständiger Synchronisation ist ebenfalls verfügbar und in den schon mehrfach zitierten Patentanmeldungen im Detail beschrieben.

Das adaptive, robuste LRT - Datenmodem kann als eigenständiges Zusatzgerät zu jeder Funkstation betrieben oder in eine vollautomatisch arbeitende Funkstation integriert werden. Letztere Methode kann die Vorteile ausnützen, dass die gemessenen Kanalqualitätsdaten (LQA), sowie die übertragene Zustandinformation und Steuerbefehle der Gegenstation (EOW) in einem Leitrechner zusammen mit Prognoseprogrammen für den zu erfüllenden Funkauftrag verwertet werden können und eine komplette Anlage optimal eingestellt und adaptiert werden kann (z.B. Frequency-Managment). Für Notfunksysteme und militärische Einsätze kann die Robustheit auch umgekehrt eingesetzt werden, indem eine nur geringe Sendeleistung benötigt wird (Gewicht, Energieverbrauch des Senders) bzw. das Sendesignal in der spektralen Belegung durch andere Benützer und Rauschen unentdeckbar verborgen bleibt (getarnte Uebermittlung). Gerade im zweiten Fall werden Vorteile gegenüber den bekannten Burst- oder Frequenzhüpftechniken gesehen, indem eine Aufklärung der hohen Sendepulsleistungen bzw. der bei Kurzwellenanwendungen relativ langen Verweilzeiten auf einer Frequenz einfacher ist (auffällige Merkmale), als die Entdeckung eines spektral unterdurchschnittlichen Signals auf den üblicherweise stark belegten Kanälen.

**Patentansprüche**

1. Verfahren zur digitalen Uebertragung von Nachrichten in Kurzwellenfunknetzen mit mehreren einen Sender und/oder einen Empfänger aufweisenden Stationen, bei welchem zur empfangsseitigen Kanalzustandsestimation dem die eigentlichen Nachrichten enthaltenden Datensignal ein Referenzsignal beigefügt und mit diesem übertragen wird, dadurch gekennzeichnet, dass die Beifügung des Referenzsignals ($b_i$) zum Datensignal ($y_i$) mittels einer Quadraturmodulation mit dem Referenzsignal in der Q-Ebene und mit dem Datensignal in der I-Ebene erfolgt, wobei die Umhüllenden ($f_q(t)$ bzw. $f_i(t)$) so gewählt werden, dass der Betrag der komplexen Enveloppe konstant wird.

2. Verfahren nach Anspruch 1, dadurch gekennzeichnet, dass neben dem Daten- und dem Referenzsignal ($y_i$ bzw. $b_i$) Kanalqualitätsdaten und Befehle für die Systemadaption übermittelt werden.

3. Verfahren nach Anspruch 2, dadurch gekennzeichnet, dass das Sendesignal in mehrere Teilsignale mit verschiedenen Frequenzen aufgespaltet und dass für jede Datensequenz pseudozufällig oder treppenförmig eine Subkanalfrequenz gewählt wird.

4. Verfahren nach einem der Ansprüche 1 bis 3, dadurch gekennzeichnet, dass aus dem Empfangssignal ($r(t)$) der Empfangsvektor elementweise detektiert und quantisiert abgespeichert wird, wobei die komplexen Werte der Quadraturdetektion des i-ten Daten- und Referenzsignalelements ($y_i$ bzw. $b_i$) die Komponenten des Empfangsvektors bilden.

5. Verfahren nach Anspruch 4, dadurch gekennzeichnet, dass die Quadraturdetektion mittels Korrelation und unter Zuhilfenahme der Schnellen Fouriertransformation FFT (W) erfolgt, und zwar abwechlungsweise mit hintereinanderfolgender FFT von einander überlappenden Zeitabschnitten.

6. Verfahren nach Anspruch 5, dadurch gekennzeichnet, dass vor der Fouriertransformation der Vektoren ($r_i$) eine Kurzburstfilterung (G1), eine Frequenzschiebung (10) des Eingangssignals um die Differenz zwischen dem FFT-Raster und der estimierten Frequenz aus der Verbindungsaufnahme sowie eine Fenstergewichtung (Gw) erfolgt.

7. Verfahren nach Anspruch 6, dadurch gekennzeichnet, dass nach der FFT für die Weiterverarbeitung drei Frequenzstützwerte selektiert werden.

8. Verfahren nach Anspruch 7, dadurch gekennzeichnet, dass nach der Selektion (11) der Detektionswerte eine Langburstfilterung (G2) und eine Einheitsskalierung (12) erfolgt.

9. Verfahren nach Anspruch 8, dadurch gekennzeichnet, dass die Selektion Daten/Referenzsignal anhand des Index (i) der Detektionswerte erfolgt, wobei die das Referenzsignal enthaltenden Detektionswerte mit dem entsprechenden Index abgespalten werden.

10. Verfahren nach Anspruch 9, dadurch gekennzeichnet, dass der Kanalzustand durch autoadaptive Filterung des Referenzsignals im Frequenzbereich estimiert wird, wobei zuerst mittels einer übergeordneten FFT(W) aus dem Referenzsignalvektor ($b_n$) ein Systemvektor ($B_n$) erzeugt wird, welcher, um die Schätzung des zusammen mit einem Geräuschanteil ($n$) additiven Bestandteil des Referenzsignalvektors bildenden Zustandsvektors ($a$) zu gewinnen, mit einer Gewichtungsmatrix (Gn) gewichtet und anschliessend einer inversen Fouriertransformation $W^{-1}$ unterworfen wird.

11. Verfahren nach Anspruch 10, dadurch gekennzeichnet, dass anschliessend an die inverse Fouriertransformation W$^{-1}$ die Demodulation und dann die Decodierung/Akkumulation und eine Zeitschlupf-Estimation erfolgt.

12. Vorrichtung zur Durchführung des Verfahrens nach Anspruch 1, mit einem Empfänger für Echtzeit-Verarbeitung der empfangenen Daten, dadurch gekennzeichnet, dass der Empfänger je eine Funktionsstufe zur Vorverarbeitung des Empfangssignals (r(t)), zur Quadraturdetektion der Signalelemente, zur Selektion Daten/Referenzsignal und zur Estimation des Kanalzustands aufweist.

13. Vorrichtung nach Anspruch 12, gekennzeichnet durch eine mit bei der Verbindungsaufnahme gewonnenen Synchronisationsparametern und mit der Baudrate gespeiste Steuerung (ST), an welche die genannten Funktionsstufen angeschlossen sind.

14. Vorrichtung nach Anspruch 13, dadurch gekennzeichnet, dass die Funktionsstufe zur Vorverarbeitung des Empfangssignals (r(t)) ein Eingangsfilter (1), einen 1. Mischer (2), ein ZF-Filter (ZF), eine AGC-Schaltung (AGC), einen zweiten Mischer (5), ein Spiegelfrequenzfilter (6) und einen A/D-Wandler (7) aufweist.

15. Vorrichtung nach Anspruch 13, dadurch gekennzeichnet, dass die Funktionsstufe zur Quadraturdetektion der Signalelemente eine Bank von Detektoren aufweist, welche gleichzeitig auf verschiedenen Frequenzen unter Zuhilfenahme einer ersten Schnellen Fouriertransformation FFT (W) arbeiten.

16. Vorrichtung nach Anspruch 15, dadurch gekennzeichnet, dass der FFT (W) ein erstes Burstfilter (G1), ein erster Frequenzschieber (10) und ein 4-Term Harris Fenster (Gw) vorgeschaltet sind.

17. Vorrichtung nach Anspruch 13, dadurch gekennzeichnet, dass die Funktionsstufe für die Selektion Daten/Referenzsignal einen Frequenzselektor (11) ein zweites Burstfilter (G2), einen Daten/Referenzssignalselektor (12), zwei Vorzeichenwechsler (13), zwei zweite Frequenzschieber (14) und zwei Pufferspeicher (15), jeweils einen für das Datensignal (yn) und einen für das Referenzsignal (bn), enthält.

18. Vorrichtung nach Anspruch 13, dadurch gekennzeichnet, dass die Funktionsstufe zur Estimation des Kanalzustands ein autoadaptives Filter aufweist, welches eine zweite Schnelle Fouriertransformation (W), eine Gewichtungsmatrix (Gn) und eine inverse Fouriertranformation W$^{-1}$ enthält.

19. Vorrichtung nach Anspruch 18, dadurch gekennzeichnet, dass nach der inversen Fouriertransformation W$^{-1}$ die Empfangsvektoren (yn) mit dem konjugiert komplexen Ausgangswert des autoadaptiven Filters multipliziert werden.

20. Vorrichtung nach Anspruch 19, dadurch gekennzeichnet, dass der aus der genannten Multiplikation resultierende Real- und Imaginärteil zur Decodierung und zur Zeitschlupfestimation verwendet werden.

## Claims

1. A process for the digital transmission of messages in short-wave radio networks with several stations comprising a transmitter and/or a receiver, in which a reference signal is added to the data signal comprising the actual message for determining the condition of the channel on the receiving side, characterized in that the adding of the reference signal (bi) to the data signal (yi) is made by means of a quadrature modulation with the reference signal in the Q plane and with the data signal in the I plane, with the envelopes (fq(t) or fi(t)) being selected in such a way that the amount of the complex envelopes becomes constant.

2. A process as claimed in claim 1, characterized in that in addition to the data and the reference signal (yi or bi) channel quality data and commands for the system adaptation are transmitted.

3. A process as claimed in claim 2, characterized in that the send signal is split up into several partial signals with different frequencies and that for every data sequence a subchannel frequency is selected pseudorandomly or in form of steps.

4. A process as claimed in one of the claims 1 to 3, characterized in that from the received signal (r(t)) the receiving vector is detected in elements and stored digitally, with the complex values of the quadrature detection of the I-th data and reference signal element (yi or bi) forming the components of the receiving vector.

5. A process as claimed in claim 4, characterized in that the quadrature detection is made by means of correlation and by using the fast Fourier transformation FFT (W), namely alternatingly with successive FFT of time segments overlapping one another.

6. A process as claimed in claim 5, characterized in that before the Fourier transformation of the vectors (ri) there occurs a short burst filtering (G1), a frequency shift (10) of the input signal by the difference between the FFT raster and the estimated frequency resulting from the establishment of the connection as well as a window weighting (Gw).

7. A process as claimed in claim 6, characterized in that three frequency support values are selected after the FFT for the further processing.

8. A process as claimed in claim 7, characterized in that after the selection (11) of the detection values there is a long burst filtering (G2) and a unit scaling (12).

9. A process as claimed in claim 8, characterized in that the selection of data/reference signal is made on the basis of the index (i) of the detection values, whereby the detection values comprising the reference signal are split off with the respect index.

10. A process as claimed in claim 9, characterized in that the channel condition is estimated by autoadaptive filtering of the reference signal in the frequency range, whereby a system vector (Bn) is produced at first by means of a superior FFT (W) from the reference signal vector (bn), which system vector is weighted with a weighting matrix (Gn), so as to obtain the evaluation of the condition vector (a) forming in combination with a noise share (n) the additive component of the reference signal vector, and thereafter weighted with a weighting matrix (Gn) and thereafter subjected to an inverse Fourier transformation $W^{-1}$.

11. A process as claimed in claim 10, characterized in that following the inverse Fourier transformation $W^{-1}$ there takes place the demodulation and then the decoding accumulation and a time-transmutation estimation.

12. An apparatus for carrying out the process as claimed in claim 1, comprising a receiver for real-time processing of the received data, characterized in that the receiver comprises a function stage for preprocessing the received signals (r(t)), for quadrature detection of the signal elements, for selecting data/reference signal and for estimating the channel condition.

13. An apparatus as claimed in claim 12, characterized by a control unit (ST) fed with synchronization parameters gained after establishing the connection and with the baud rate, to which unit are connected the said function stages.

14. An apparatus as claimed in claim 13, characterized in that the function stage for preprocessing the received signal (r(t)) comprises an input filter (1), a first mixer (2), an IF filter (ZF), an AGC circuit (AGC), a second mixer (5), a mirror frequency filter (6) and an A/D converter (7).

15. An apparatus as claimed in claim 13, characterized in that the function stage for quadrature detection of the signal elements comprises a bank of detectors which operate simultaneously at different frequencies by using a first fast Fourier transformation FFT (W).

16. An apparatus as claimed in claim 15, characterized in that the FFT (W) is provided upstream with a first burst filter (G1), a first frequency shifter (10) and a four-term Harris window (Gw).

17. An apparatus as claimed in claim 13, characterized in that the function stage for the selection data/reference signal comprises a frequency selector (11), a second burst filter (G2), a data/reference signal selector (12), two sign changers (13), two second frequency shifters (14) and two buffer memories (15), one for the data signal (yn) and one for the reference signal (bn).

18. An apparatus as claimed in claim 13, characterized in that the function stage for estimating the channel condition comprises an autoadaptive filter which contains a second fast Fourier transformation (W), a weighting matrix (Gn) and an inverse Fourier transformation $W^{-1}$.

19. An apparatus as claimed in claim 18, characterized in that after the inverse Fourier transformation $W^{-1}$ the receiving vectors (yn) are multiplied with the conjugated complex initial value of the autoadaptive filter.

20. An apparatus as claimed in claim 19, characterized in that the real and imaginary part resulting from the said multiplication are used for decoding and time transmutation estimation.

## Revendications

1. Procédé pour la transmission numérique d'informations sur des réseaux radio pour ondes courtes avec plusieurs stations émettrices et/ou réceptrices, dans lequel on ajoute, pour permettre d'identifier l'état du canal côté réception, au signal de données contenant les informations à proprement parler, un signal de référence transmis avec le signal de données, caractérisé par le fait que l'adjonction du signal de référence($\underline{b}i$) au signal de données ($\underline{y}i$) est réalisée au moyen d'une modulation déphasée en quadrature, avec le signal de référence au niveau Q et le signal de données au niveau I, les enveloppantes ($fq(t)$ et $fi(t)$) étant choisies de manière à ce que le montant de l'enveloppe complexe devienne constant.

2. Procédé selon revendication 1, caractérisé par le fait que des données relatives à la qualité du canal et des instructions d'adaptation du système sont transmises en plus des signaux de données et de référence ($\underline{y}i$ et $\underline{b}i$,respectivement).

3. Procédé selon revendication 2, caractérisé par le fait que le signal émetteur est sectionné en plusieurs signaux partiels de fréquence différente et que, pour chaque séquence de données, le système choisit selon une suite pseudo-aléatoire ou de manière échelonnée une fréquence sous-canal.

4. Procédé selon l'une des revendications 1 à 3, caractérisé par le fait que le vecteur de réception est détecté par élément à partir du signal de réception ($r(t)$) et sauvegardé numériquement, les valeurs complexes de la détection de quadrature de l'élément i du signal de données et du signal de référence ($yi$ et $bi$) formant les composants du vecteur de réception.

5. Procédé selon revendication 4, caractérisé par le fait que la détection de quadrature est réalisée par corrélation et au moyen d'une transformation rapide de Fourier FFT (W), à savoir alternativement avec des FFT consécutives de tranches de temps entrelacées.

6. Procédé selon revendication 5, caractérisé par le fait que la transformation de Fourier des vecteurs ($ri$) est précédée d'un filtrage des impulsions short-burst (G1), d'un déplacement de fréquence (10) du signal d'entrée à raison de la différence entre la grille FFT et la fréquence estimée sur la base de la communication établie, et d'une pondération de fenêtre (Gw).

7. Procédé selon revendication 6, caractérisé par le fait que suite à la transformation de Fourier, trois valeurs de fréquence d'appui sont sélectionnées pour le traitement ultérieur.

8. Procédé selon revendication 7, caractérisé par le fait que suite à la sélection (11) des valeurs de détection, un filtrage des impulsions longburst (G2) ainsi qu'un échelonnement par unité (12) ont lieu.

9. Procédé selon revendication 8, caractérisé par le fait que la sélection signal de données/signal de référence est réalisée au moyen de l'indice (i) des valeurs de détection, les valeurs de détection contenant le signal de référence étant découpées au moyen de l'indice correspondant.

10. Procédé selon revendication 9, caractérisé par le fait que l'état du canal est identifié par filtrage adaptatif du signal de référence dans la gamme de fréquence, un vecteur système ($\underline{B}n$) étant généré tout d'abord au moyen d'une transformation rapide de Fourier (W) prioritaire à partir du vecteur du signal de référence ($\underline{b}n$), vecteur qui est ensuite pondéré au moyen d'une matrice de pondération (Gn) et ensuite soumis à une transformation de Fourier inverse ($W^{-1}$), afin d'obtenir l'identification du vecteur d'état ($\underline{a}$) formant, avec une portion de bruit($\underline{n}$), le composant additif du vecteur du signal de référence.

11. Procédé selon revendication 10, caractérisé par le fait que la transformation de Fourier inverse ($W^{-1}$) est suivie de la démodulation et ensuite du décodage/de l'accumulation ansi que d'une identification par glissement de temps.

12. Dispositif destiné à la réalisation du procédé selon revendication 1, comprenant un récepteur pour le traitement en temps réel de données reçues, caractérisé par le fait que le récepteur est doté respectivement d'un étage de fonctionnement pour le prétraitement du signal de réception ($r(t)$), pour la détection de quadrature des éléments de signaux et pour la sélection signaux de données/signaux de référence, ainsi que pour l'identification de l'état du canal.

**13.** Dispositif selon revendication 12, caractérisé par une commande (ST) dotée de paramètres de synchronisation générés lors de l'établissement de la communication et alimentée par le débit en bauds, à laquelle sont raccordées les étages de fonctionnement mentionnées plus haut.

**14.** Dispositif selon revendication 13, caractérisé par le fait que l'étage de fonctionnement est doté, en vue du prétraitement du signal de réception (r(t)) d'un filtre d'entrée (1), d'un ler mélangeur (2), d'un filtre de fréquence intermédiaire (IF), d'une commande automatique de gain (AGC), d'un second mélangeur (5), d'un filtre de fréquence-image (6) et d'un convertisseur analogique/numérique (CAN) (7).

**15.** Dispositif selon revendication 13, caractérisé par le fait que l'étage de fonctionnement pour la détection de quadrature des éléments de signaux présente une banque de détecteurs fonctionnant simultanément sur différentes fréquences grâce à une première transformation rapide de Fourier FFT (W).

**16.** Dispositif selon revendication 15, caractérisé par le fait que la FFT (W) est précédée d'un premier filtre à rafales (G1), d'un premier déplaceur de fréquence (10) et d'une fenêtre 4-term Harris (Gw).

**17.** Dispositif selon revendication 13, caractérisé par le fait que l'étage de fonctionnement présente pour la sélection signal de données/signal de référence un sélecteur de fréquence (11), un second filtre à rafales (G2), un sélecteur de signaux de données/de référence (12), deux changeurs du signe (13), deux seconds déplaceurs de fréquence (14) et deux mémoires tampon (15), l'une pour le signal de données($\underline{y}n$) et l'autre pour le signal de référence($\underline{b}n$).

**18.** Dispositif selon revendication 13, caractérisé par le fait que l'étage de fonctionnement présente pour l'identification de l'état du canal un filtre autoadaptateur contenant une deuxième transformation rapide de Fourier (W), une matrice de pondération (Gn) et une transformation de Fourier inverse ($W^{-1}$).

**19.** Dispositif selon revendication 18, caractérisé par le fait que, suite à la transformation de Fourier inverse ($W^{-1}$), les vecteurs de réception ($\underline{y}n$) sont multipliés par la valeur de sortie conjuguée complexe du filtre autoadaptateur.

**20.** Dispositif selon revendication 19, caractérisé par le fait que les portions réelle et imaginaire résultant de la multiplication mentionnée plus haut sont utilisées pour le décodage et l'identification du glissement de temps.

FIG. 1

FIG. 2

14

FIG. 3

FIG. 4

FIG. 5

EP 0 336 247 B1

FIG. 6a

FIG. 6 b

FIG. 7

FIG. 8

$$\underline{R}_i^o$$

$$\underline{R}_i^{(+3)}$$

$$\underline{R}_i^{(-3)}$$

G2

$$\underline{R}_i'$$

$$\underline{R}_i^o$$

$$\underline{R}_i^{(+3)}$$

$$\underline{R}_i^{(-3)}$$

KG

$$|(\ )|^{-1}$$

$$g_i^o$$

$$g_i^{\mathbb{II}}$$

$$\underline{R}_i'$$

FIG.9

KG

$$\underline{R}_i^o$$ | abs(Re[ ])+ abs(Im[ ]) | $$R_i^o$$ | $$\overset{(\infty)}{h_1}(i)$$ | $$R_i^o$$ $$\bar{R}_i^o$$

$$\underline{R}_i^{(+3)}$$ | abs(Re[ ])+ abs(Im[ ]) | $$R_i^{(+3)}$$ | $$\overset{(\infty)}{h_1}(i)$$ | $$R_i^{(+3)}$$ $$\bar{R}_i^{(+3)}$$

$$\underline{R}_i^{(-3)}$$ | abs(Re[ ])+ abs(Im[ ]) | $$R_i^{(-3)}$$ | $$\overset{(\infty)}{h_1}(i)$$ | $$R_i^{(-3)}$$ $$\bar{R}_i^{(-3)}$$

VL

$$g_i^o$$

FIG.10

| (1) | (2) | (3) | (4) | (5) | $g_i^o$ |
|-----|-----|-----|-----|-----|---------|
| 1 | 1 | 1 | 1 | 1 | 0 |
| 1 | 1 | 1 | 0 | X | 1/4 |
| 1 | 1 | 1 | X | 0 | 1/4 |
| 1 | 0 | X | 1 | 1 | 1/4 |
| 1 | X | 0 | 1 | 1 | 1/4 |
| 0 | 1 | 1 | 1 | 1 | 1/2 |
| alle übrigen Zustände | | | | | 1 |

FIG. 11

FIG. 14

FIG.12

| $s_n$ | q | (1) | (2) | (3) |
|---|---|---|---|---|
| 0 | $<q_{min}$ | 0 | 1 | 1 |
| 0 | $>q_{min}$ | 0 | 1 | 1 |
| 1 | $<q_{min}$ | 0 | 1 | 1 |
| 1 | $>q_{min}$ | 1 | 0 | 0 |

EP 0 336 247 B1

FIG.13

EP 0 336 247 B1